**Europäisches Patentamt**

**European Patent Office**

**Office européen des brevets**

(19)

(11) Veröffentlichungsnummer: **0 032 988**
**B1**

(12) **EUROPÄISCHE PATENTSCHRIFT**

(45) Veröffentlichungstag der Patentschrift:
**11.07.84**

(51) Int. Cl.³: **F 16 F 9/36**

(21) Anmeldenummer: **80107408.9**

(22) Anmeldetag: **27.11.80**

(54) **Dichtungsanordnung, insbesondere zur Abdichtung einer Kolbenstange von Teleskop-Schwingungsdämpfern.**

(30) Priorität: **25.01.80 DE 3002700**
**18.09.80 DE 3035226**

(43) Veröffentlichungstag der Anmeldung:
**05.08.81 Patentblatt 81/31**

(45) Bekanntmachung des Hinweises auf die Patenterteilung:
**11.07.84 Patentblatt 84/28**

(84) Benannte Vertragsstaaten:
**FR GB IT SE**

(56) Entgegenhaltungen:
**EP - A - 0 025 874**
**DE - A - 1 425 559**
**DE - A - 1 650 955**
**DE - A - 1 931 380**
**DE - A - 2 206 771**
**DE - A - 2 227 042**
**DE - A - 2 455 267**
**DE - A - 2 554 349**
**DE - A - 2 922 437**
**DE - B - 1 178 256**
**DE - B - 1 275 367**
**DE - U - 1 690 015**
**DE - U - 7 708 863**
**FR - A - 1 407 890**
**GB - A - 959 938**

(73) Patentinhaber: **Boge GmbH, Bogestrasse 50,**
**D-5208 Eitorf/Sieg (DE)**

(72) Erfinder: **Schmidt, Rudolf, Ulmenweg 9,**
**D-5208 Eitorf/Sieg (DE)**
Erfinder: **Schalles, Walter, Ing. (grad.), Sonnenau 12,**
**D-5227 Windeck-Stromberg (DE)**

(56) Entgegenhaltungen: (Fortsetzung)
**US - A - 2 943 711**
**US - A - 4 005 769**

ACTORUM AG

## Beschreibung

Die Erfindung bezieht sich auf eine Dichtungsanordnung, insbesondere zur Abdichtung einer Kolbenstange von Teleskop-Schwingungsdämpfern, vornehmlich für Kraftfahrzeuge, wobei die Kolbenstange gegenüber dem Dämpfergehäuse axial verschieblich und radial beweglich ist, mit einer Manschette aus elastischem Werkstoff, deren als Dichtlippe ausgebildeter Gleitteil von einem spielfrei auf der Kolbenstange geführten, aus einem Gleitlagerwerkstoff bestehenden Ring den radialen Bewegungen der Kolbenstange nachgeführt wird, welcher als Stützring für die dem Arbeitsraum des Schwingungsdämpfers zugewandte Dichtlippe dient, sowie mit einer mit dem Mantelrohr des Schwingungsdämpfers verbundenen starren Scheibe, an der eine weitere ebenfalls mit dem Stützring radial bewegbare Dichtung anliegt.

Es sind Dichtungen bekannt (z.B. DE-A-22 27 042), bei denen die im wesentlichen L-förmige Dichtung mit ihrer radial aussenliegenden Mantelfläche vom Hochdruck beaufschlagt wird. Der Stützring ist mit Spiel zur Kolbenstange angeordnet. Bei diesem vorhandenen Spiel zwischen Stützring und Kolbenstange ist von Nachteil, dass der Stützring bei Kälte den Dichtring nicht mehr der radial ausweichenden Kolbenstange nachführen kann, so dass schliesslich eine Undichtigkeit auftritt. Durch die druckabhängige Anpressung des Dichtringes auf die Dichtflächen werden tiefe bzw. niedrige Temperaturen nicht mehr sicher beherrscht.

Der vorliegenden Erfindung liegt die Aufgabe zugrunde, eine einfache und wirksame Dichtungsanordnung zu schaffen, welche die Nachteile der bekannten Dichtung vermeidet und bei welcher insbesondere auch bei besonders tiefen Temperaturen eine störungsfreie Funktion der Dichtung und damit des Schwingungsdämpfers gewährleistet ist.

Diese Aufgabe wird bei einer Dichtungsanordnung der eingangs beschriebenen Gattung erfindungsgemäss dadurch gelöst, dass der Stützring als innenspannender geschlitzter Ring ausgebildet ist.

Bei der erfindungsgemässen Dichtungsanordnung ist auf besonders einfache Weise, nämlich durch Vermeiden von äusseren Einspannstellen dieser am Dämpfergehäuse, sichergestellt, dass die Dichtlippe immer, und zwar auch bei besonders tiefen Temperaturen, bei welchen die Manschette hart wird, den Kolbenstangenquerbewegungen kontaktschlüssig folgen kann. Der geschlitzte Ring gewährleistet eine spielfreie Führung der Dichtlippe auf der Kolbenstange. Hierdurch ist eine gleichbleibend gute Dichtwirkung der Dichtungsanordnung und somit eine gleichbleibend sichere Funktionsweise eines mit einer Dichtungsanordnung nach der Erfindung ausgestatteten Schwingungsdämpfers gewährleistet. Im übrigen ergibt sich bei der erfindungsgemässen Dichtungsanordnung infolge des Drucks im Arbeitsraum auf einfache Weise auch eine selbsttätige Abdichtung an der zusätzlichen Dichteinrichtung gegenüber der starren Scheibe.

Mit Vorteil hat der Stützring einen im wesentlichen rechteckigen Querschnitt und ist im Bereich des vom Arbeitsraum entfernten Endes der Manschette in dieser mit axialem Spiel von der starren Scheibe befestigt. Dabei ist vorteilhafterweise zwischen Stützring und Dichtlippe eine, vorzugsweise metallische, Armierungsanordnung in der Manschette vorgesehen.

Bei einer anderen ebenfalls vorteilhaften Ausführungsform der Dichtungsanordnung nach der Erfindung ist die Armierungsanordnung als Armierungsscheibe ausgebildet, welche mit axialem Abstand von dem in die Manschette eingepressten Stützring in der Dichtlippe angeordnet ist derart, dass der Innendurchmesser der Armierungsscheibe grösser ist als der Innendurchmesser der Dichtlippe, wobei die Manschette an ihrem vom Arbeitsraum entfernten Ende im Bereich des Stützringes eine zusätzliche, radial nach aussen gerichtete Dichtlippe aufweist, welche gegen die starre Scheibe anliegt.

Gemäss einer vorteilhaften Weiterbildung der Erfindung ist an der starren Scheibe eine gegen die Kolbenstange anliegende Abstreiflippe aus elastischem Werkstoff angeordnet.

Gemäss einer ganz besonders vorteilhaften Weiterbildung der Erfindung ist im Bereich der Dichtungsmanschette ein mit einer umlaufenden Dichtlippe an der Kolbenstange unter Vorspannung anliegender Dichtungsring aus temperaturbeständigem Kunststoff angeordnet.

Dabei wird von der Tatsache Gebrauch gemacht, dass Kunststoff einen grösseren Wärmeausdehnungskoeffizienten als Metall hat. Dies hat zur Folge, dass sich mit abnehmender Temperatur der Dichtungsring aus temperaturbeständigem Kunststoff zusammenzieht und somit insbesondere auch im Bereich zwischen —25°C und beispielsweise —40°C seine volle Dichtwirkung erreicht. Der Anwendungsbereich der Dichtungsanordnung nach der Erfindung wird damit insbesondere in Richtung tiefer Temperaturen merklich vergrössert.

Die Vorspannung des Dichtungsringes wird in vorteilhafter Weise entweder durch einen vorgespannten, den Dichtungsring umschliessenden O-Ring oder durch die Dichtungsmanschette, die in diesem Bereich einen besonderen Wulst besitzt, erreicht.

Die an der starren Scheibe anliegende Dichteinrichtung ist durch die Dichtungsmanschette gebildet, die in diesem Bereich einen umlaufenden, im Querschnitt etwa halbkreisförmigen Vorsprung besitzt. Zusätzlich ist der Dichteinrichtung eine in axialer Richtung wirkende Druckfeder zugeordnet, die sicherstellt, dass der umlaufende Vorsprung der Dichtungsmanschette ständig dichtend an der Scheibe anliegt.

Die Erfindung wird nachstehend anhand von in der Zeichnung schematisch dargestellten Ausführungsbeispielen näher erläutert. Es zeigen:

Figur 1 im Axialschnitt das eine erste Ausführungsform einer erfindungsgemässen Dichtungsanordnung enthaltende Kopfende eines Teleskop-Schwingungsdämpfers

Figur 2 einen Halbschnitt eines Kopfendes mit Dichtungsanordnung eines Teleskop-Schwingungsdämpfers, mit einer weiteren Ausführungsform der Erfindung

Figur 3 einen Ausschnitt der Figur 2 mit einer besonders ausgebildeten Dichtungsmanschette.

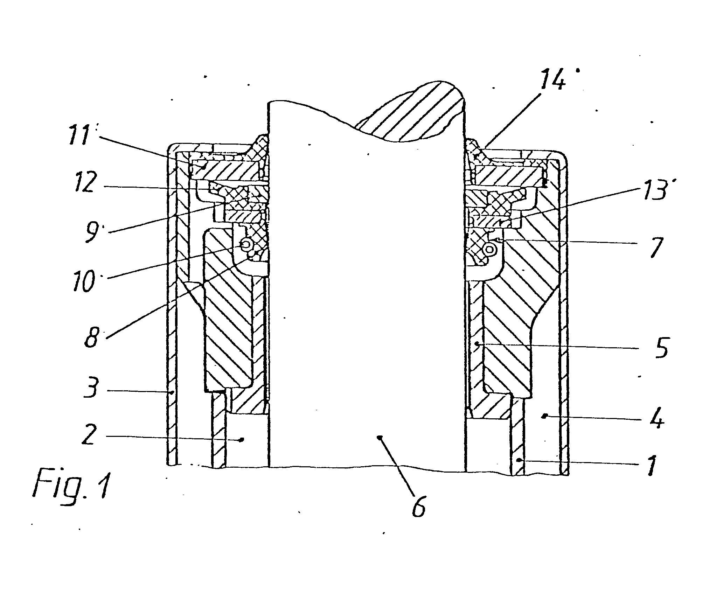

Bei der Ausführungsform nach der Figur 1 ist ein von einem Zylinderrohr 1 umschlossener Arbeitsraum 2 mit einem von einem Mantelrohr 3 umschlossenen Ausgleichsraum 4 an ihrem oberen Ende durch eine Führungsbuchse 5 im Deckel 5' abgeschlossen. Der Arbeitsraum 2 und die Kolbenstangenführung 5 sind von einer Kolbenstange 6 durchdrungen. Die Kolbenstange 6 führt während des Betriebs des Schwingungsdämpfers axiale Bewegungen sowie ferner radiale Querbewegungen innerhalb des Radialspiels der Führungsbuchse 5 aus.

Die Kolbenstange 6 ist durch eine erfindungsgemässe allgemein mit 7 bezeichnete Dichtungsanordnung im Bereich des Deckels 5' abgedichtet. Die Dichtungsanordnung 7 weist eine Manschette aus elastischem Werkstoff auf, deren als Dichtlippe 8 ausgebildeter Gleitteil von einem spielfrei auf der Kolbenstange 6 geführten Ring 9 den radialen Bewegungen der Kolbenstange 6 nachgeführt wird. Der Ring 9 dient als Stützring für die dem Arbeitsraum des Schwingungsdämpfers zugewandte Dichtlippe 8, die von einer Wurmfeder 10 umspannt wird. Ferner ist eine mit dem Mantelrohr 3 des Stossdämpfers verbundene starre Scheibe 11 vorgesehen.

Erfindungsgemäss ist der aus einem Gleitlagerwerkstoff bestehende Stützring 9 in der Dichtungsanordnung 7 befestigt, und eine zusätzliche Dichteinrichtung 12 liegt gegen die gegenüber dem Mantelrohr 3 abgedichtete starre Scheibe 11 an. Die Dichtungsanordnung ist dabei an ihrem gesamten nicht gegen die Kolbenstange 6 anliegenden Aussenumfang axial und radial beweglich angeordnet.

Bei der Ausführungsform der erfindungsgemässen Dichtungsanordnung 7 hat der Stützring 9 einen im wesentlichen rechteckigen Querschnitt und ist im Bereich des vom Arbeitsraum 2 entfernten Endes der Manschette in dieser mit axialem Abstand von der starren Scheibe 11 befestigt. Ferner ist zwischen dem Stützring 9 und der Dichtlippe 8 eine metallische Armierungsanordnung 13 in der Manschette vorgesehen.

Bei der Ausbildung der Dichtungsanordnung 7 ist die Armierungsscheibe 13 mit axialem Abstand vom Stützring 9 in der Dichtlippe 8 derart angeordnet, dass der Innendurchmesser der Armierungsscheibe 13 grösser ist als der Innendurchmesser der Dichtlippe 8. An ihrem vom Arbeitsraum 2 entfernten Ende weist die Manschette im Bereich des Stützringes 9 die als radial nach aussen gerichtete Dichtlippe ausgebildete zusätzliche Dichteinrichtung 12 auf, welche gegen die starre Scheibe 11 anliegt. Bei dieser Ausführungsform ist der Stützring 9 als innenspannender, geschlitzter Ring ausgebildet. Hierdurch ergibt sich eine praktisch vollkommen spielfreie Lagerung des Stützringes 9 an der Kolbenstange 6 und somit auch eine besonders gute laufende Nachführung der Dichtlippe 8 gegenüber den auftretenden Kolbenstangenquerbewegungen.

Bei der dargestellten Ausführung ergibt sich eine selbsttätige Abdichtwirkung der zusätzlichen Dichteinrichtung 12 dadurch, dass die gesamte Dichtungsanordnung durch den im Dämpfergehäuse herrschenden Innedruck in Richtung auf die starre Scheibe 11 gedrückt wird. Dabei bleibt jedoch die Dichtungsanordnung 7 immer, und zwar auch bei besonders tiefen Temperaturen, radial beweglich, so dass sie den auftretenden Kolbenstangenquerbewegungen folgen kann.

An der starren Scheibe 11 ist im übrigen eine gegen die Kolbenstange 6 anliegende Abstreiflippe 14 aus elastischem Werkstoff angeordnet.

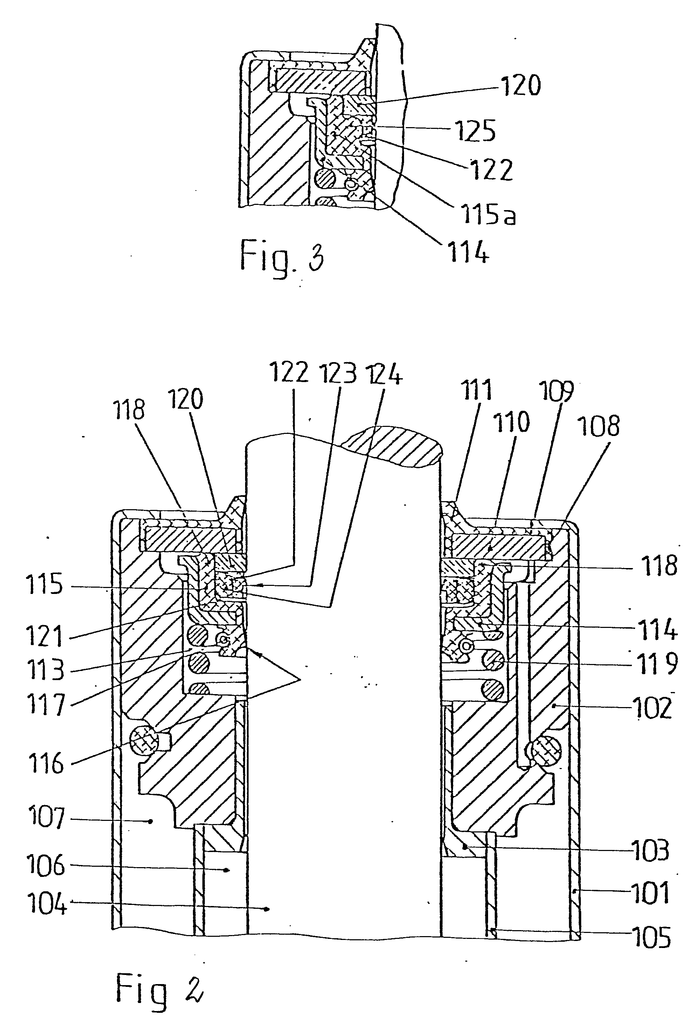

Von dem Teleskop-Schwingungsdämpfer nach Figur 2 ist ausschnittsweise ein Mantelrohr 101 gezeigt, das an seinem umgebördelten Ende einen Deckel 102 mit einer Führungsbuchse 103 dichtend aufnimmt. In der Führungsbuchse 103 ist eine Kolbenstange 104 axial verschieblich gelagert, die innerhalb des Radialspiels der Führungsbuchse 103 auch geringfügige radiale Querbewegungen ausführen kann. Zwischen der Kolbenstange 104 und dem Mantelrohr 101 ist an dem Deckel 102 ein Zylinderrohr 105 dichtend angeschlossen, die den Ringraum zwischen der Kolbenstange 104 und dem Mantelrohr 101 in einen ringförmigen Arbeitsraum 106 und einen ringförmigen Ausgleichsraum 107 unterteilt.

An seinem äusseren, der Bördelung des Mantelrohres 101 zugewandten Ende weist der Deckel 102 eine umlaufende Aussparung 108 auf, in die eine beispielsweise dreiseitig von einer Dichtung 109 umschlossene, die Kolbenstange 104 mit Abstand umschliessende Scheibe 110 fest und dichtend eingesetzt ist. Die Dichtung 109 besteht aus einem Elastomer, beispielsweise Acryl-Nitril-Kautschuk, und besitzt an ihrer äusseren, der Kolbenstange 104 zugewandten Kante eine Abstreif- bzw. Staublippe 111.

An die Unterseite der Scheibe 110 schliesst sich eine weitere ringförmige Aussparung 113 des Deckels 102 an, in die eine mittels einer ringförmigen Armierung 114 verstärkte Dichtungsmanschette 115 eingesetzt ist. Die Dichtungsmanschette 115 besteht bei einer Verwendung des Schwingungsdämpfers bei Temperaturen bis etwa +110°C aus preiswertem Acryl-Nitril-Kautschuk und bei einem Einsatz bei Temperaturen bis etwa +180°C aus Fluor-Kautschuk. An ihrem zum Arbeitsraum 106 gerichteten Ende besitzt die Dichtungsmanschette 115 eine umlaufende, an der Kolbenstange 104 anliegende Dichtlippe 116, die an der Aussenfläche der Dichtungsmanschette 115 von einer Wurmfeder 117 umspannt ist.

An ihrem der Scheibe 110 zugewandten Ende ragt die Dichtungsmanschette 115 im nicht eingebauten Zustand über die Armierung 114 hinaus und bildet hier eine umlaufende, im Querschnitt als halbkreisförmiger Vorsprung geformte Dichteinrichtung 118. Im eingebauten Zustand wird die Armierung 114 und damit auch die Dichtungsmanschette 115 durch eine vorgespannte Feder 119 gegen die Scheibe 110 gedrückt, wobei sich die Dichteinrichtung 118, wie in Figur 3 ersichtlich, verformt. Von dieser Verformung wird ein Stütz- bzw. Führungsring 120 erfasst, der zwischen der Manschette 115 und der Kolbenstange 104 angeordnet ist. Dieser aus einem geeigneten Gleitlagerwerkstoff bestehende Stütz- bzw. Führungsring 120 ist auf der Kolbenstange 104 geführt und stellt sicher, dass die Manschette 115 und die Armierung 114 bei jeder radialen Bewegung der Kolbenstange 104 ebenfalls radial verschoben werden, so dass die Dichtwirkung immer erhalten bleibt. Es ist als innenspannender, geschlitzter Ring ausgebildet.

In einen von der Kolbenstange 104, dem Stütz- bzw. Führungsring 120 und der Dichtungsmanschette 115 umschlossenen Ringraum 121 iat ein Dichtungsring 122 aus temperaturbeständigem Kunststoff, beispielsweise Polytetrafluoräthylen, eingesetzt, der mit einer umlaufenden Dichtlippe 123 an der Kolbenstange 104 anliegt. Dabei wird der Dichtungsring 122 durch einen vorgespannten O-Ring 124 gegen die Kolbenstange 104 gedrückt, der zwischen Dichtungsring 122 und Dichtungsmanschette 115 unter Verformung eingebracht ist. Es ist auch denkbar, dass der Führungsring 120 unterhalb des Dichtungsringes 122 und des O-Ringes 124 angeordnet ist.

Bei dem Ausführungsbeispiel gemäss Figur 3 ist die Dichtungsmanschette 115a mit einem besonderen, ringförmigen Wulst 125 versehen, der den O-Ring 124 der Figur 2 ersetzt und die Vorspannung für den Dichtungsring 122 aufbringt.

**Patentansprüche**

1. Dichtungsanordnung, insbesondere zur Abdichtung einer Kolbenstange (6, 104) von Teleskop-Schwingungsdämpfern, vornehmlich für Kraftfahrzeuge, wobei die Kolbenstange (6, 104) gegenüber dem Dämpfergehäuse (3, 101) axial verschieblich und radial beweglich ist, mit einer Manschette aus elastischem Werkstoff, deren als Dichtlippe (8, 116) ausgebildeter Gleitteil von einem spielfrei auf der Kolbenstange (6, 104) geführten, aus einem Gleitlagerwerkstoff bestehenden Ring (9, 120) den radialen Bewegungen der Kolbenstange (6, 104) nachgeführt wird, welcher als Stützring (9, 120) für die dem Arbeitsraum (2, 106) des Schwingungsdämpfers zugewandte Dichtlippe (8, 116) dient, sowie mit einer mit dem Mantelrohr des Schwingungsdämpfers verbundenen starren Scheibe, an der eine weitere, ebenfalls mit dem Stützring (9, 120) radial bewegbare Dichtung (12, 118) anliegt, dadurch gekennzeichnet, dass der Stützring (9, 120) als innenspannender geschlitzter Ring ausgebildet ist.

2. Dichtungsanordnung nach Anspruch 1, dadurch gekennzeichnet, dass der Stützring (9) einen im wesentlichen rechteckigen Querschnitt hat und im Bereich des vom Arbeitsraum (2) entfernten Endes der Manschette in dieser mit axialem Abstand von der starren Scheibe (11) befestigt ist.

3. Dichtungsanordnung nach Anspruch 1 oder 2, dadurch gekennzeichnet, dass zwischen Stützring (9, 120) und Dichtlippe (8, 116) eine, vorzugsweise metallische Armierungsanordnung (13, 114) in der Manschette (115, 115a) vorgesehen ist.

4. Dichtungsanordnung nach Anspruch 3, dadurch gekennzeichnet, dass die Armierungsanordnung (13) als Armierungsscheibe ausgebildet ist, welche mit axialem Abstand von dem in die Manschette eingepressten Stützring (9) in der Dichtlippe (8) angeordnet ist derart, dass der Innendurchmesser der Armierungsscheibe (13) grösser ist als der Innendurchmesser der Dichtlippe (8), wobei die Manschette an ihrem vom Arbeitsraum (2) entfernten Ende im Bereich des Stützringes (9) eine zusätzliche, radial nach aussen gerichtete Dichtlippe (12) aufweist, welche gegen die starre Scheibe (11) anliegt.

5. Dichtungsanordnung nach Anspruch 4, dadurch gekennzeichnet, dass an der starren Scheibe (11) eine gegen die Kolbenstange (6) anliegende Abstreiflippe (14) aus elastischem Werkstoff angeordnet ist.

6. Dichtungsanordnung nach Anspruch 1 oder 3, dadurch gekennzeichnet, dass im Bereich der Dichtungsmanschette (115, 115a) ein mit einer umlaufenden Dichtlippe (123) an der Kolbenstange (104) unter Vorspannung anliegender Dichtungsring (122) aus temperaturbeständigem Kunststoff angeordnet ist.

7. Dichtungsanordnung nach Anspruch 6, dadurch gekennzeichnet, dass der Dichtungsring (122) aus Polytetrafluoräthylen gebildet ist.

8. Dichtungsanordnung nach Anspruch 6 oder 7, dadurch gekennzeichnet, dass der Dichtungsring (122) von einem vorgespannten O-Ring (124) umschlossen ist.

9. Dichtungsanordnung nach Anspruch 6 oder 7, dadurch gekennzeichnet, dass der Dichtungsring (122) von der Dichtungsmanschette (125, 115a) unter Vorspannung umschlossen ist.

10. Dichtungsanordnung nach Anspruch 9, dadurch gekennzeichnet, dass die Dichtung (118) mit der Dichtungsmanschette (115, 115a) einstückig ausgebildet ist.

11. Dichtungsanordnung nach Anspruch 10, dadurch gekennzeichnet, dass der Dichtung (118) eine in axialer Richtung wirkende Druckfeder (119) zugeordnet ist.

**Claims**

1. Sealing arrangement, particularly for sealing a piston rod (6, 104) of telescopic oscillation dampers, primarily for motor vehicles, the piston rod (6, 104) being axially displaceable and also radially movable with respect to the damper housing (3, 101), with a sleeve of elastic material of which the sliding portion in the form of a sealing lip (8, 116) is guided by a ring (9, 120) made of sliding bearing material and guided without play on the piston rod (6, 104), to follow the radial movements of the piston rod (6, 104), which ring serves as a supporting ring (9, 120) for the sealing lip (8, 116) which faces towards the working chamber (2, 106) of the damper, and with a rigid disc connected to the housing tube of the damper, against which there engages a further seal (12, 118), likewise radially movable with the supporting ring (9, 120), characterised in that, the supporting ring (9, 120) is formed as an inwardly stressed slotted or split ring.

2. Sealing arrangement according to claim 1, characterised in that, the supporting ring (9) has a substantially rectangular cross section and is secured into the sleeve, in the region of that end of the sleeve which is furthest from the working chamber (2), with axial spacing away from the rigid disc (11).

3. Sealing arrangement according to claim 1 or 2, characterised in that, between the supporting ring (9, 120) and sealing lip (8, 116) a reinforcing arrangement (13, 114), preferably metallic, is provided in the sleeve (115, 115a).

4. Sealing arrangement according to claim 3, characterised in that, the reinforcing arrangement (13) is in the form of a reinforcing disc which is arranged in the sealing lip (8) with axial spacing away from the supporting ring (9) pressed into the sleeve, in such a way that the inside diameter of the reinforcing disc (13) is larger than the inside diameter of the sealing lip (8), the sleeve having at that end of it which is furthest from the working chamber (2) and in the region of the supporting ring (9) an additional radially outwardly pointing sealing lip (12) which engages against the rigid disc (11).

5. Sealing arrangement according to claim 4, characterised in that, a scraper lip (14) of elastic material is arranged on the rigid disc (11) and bearing against the piston rod (6).

6. Sealing arrangement according to claim 1 or 3, characterised in that, in the region of the sealing sleeve (115, 115a) there is arranged a sealing ring (122) of heat-resistant plastics with a circumferentially extending sealing lip (123) engaging with pre-load against the piston rod (104).

7. Sealing arrangement according to claim 6, characterised in that, the sealing ring (122) is made of polytetrafluoroethylene.

8. Sealing arrangement according to claim 6 or 7, characterised in that, the sealing ring (122) is surrounded by a pre-stressed O-ring (124).

9. Sealing arrangement according to claim 6 or 7, characterised in that, the sealing ring (122) is surrounded by the sealing sleeve (125, 115a) with pre-stress.

10. Sealing arrangement according to claim 9, characterised in that, the seal (118) is formed in one piece with the sealing sleeve (115, 115a).

11. Sealing arrangement according to claim 10, characterised in that, there is associated with the seal (118) an axially acting compression spring (119).

## Revendications

1. Dispositif d'étanchéité, en particulier pour une tige (6, 104) de piston d'amortisseur téléscopique, principalement pour véhicules à moteur, ladite tige (6, 104) coulissant axialement par rapport au carter (3, 101) et étant mobile radialement; avec une garniture en matériau élastique dont la partie coulissante, réalisée sous forme de lèvre d'étanchéité (8, 116), suit les mouvements radiaux de la tige (6, 104) par l'intermédiaire d'une bague (9, 120) guidée sans jeu sur la tige (6, 104), constituée par un matériau de palier lisse et servant de bague d'appui (9, 120) à la lèvre d'étanchéité (8, 116) située en regard de la chambre de travail (2, 106) de l'amortisseur; et avec une rondelle rigide, reliée au tube réservoir de l'amortisseur et sur laquelle s'applique un joint d'étanchéité (12, 118) également mobile radialement avec la bague d'appui (9, 120), ledit dispositif étant caractérisé par la réalisation de la bague d'appui (9, 120) sous forme d'une bague fendue à serrage intérieur.

2. Dispositif d'étanchéité selon revendication 1, caractérisé en ce que la bague d'appui (9) présente une section sensiblement rectangulaire et est fixée dans la garniture, au voisinage de l'extrémité de cette dernière opposée à la chambre de travail (2), à distance axiale de la rondelle rigide (11).

3. Dispositif d'étanchéité selon une des revendications 1 ou 2, caractérisé en ce qu'un dispositif d'armature (13, 114) de préférence métallique est prévue dans la garniture (115, 115a) entre la bague d'appui (9, 120) et la lèvre d'étanchéité (8, 116).

4. Dispositif d'étanchéité selon revendication 3, caractérisé en ce que le dispositif d'armature (13) est réalisé sous forme d'un disque d'armature disposé dans la lèvre d'étanchéité (8) à distance axiale de la bague d'appui (9) emmanchée dans la garniture, de façon que le diamètre intérieur du disque d'armature (13) est supérieur à celui de la lèvre d'étanchéité (8), l'extrémité de la garniture opposée à la chambre de travail (2) présentant au voisinage de la bague d'appui (9) une lèvre d'étanchéité (12) supplémentaire, dirigée radialement vers l'extérieur et s'appliquant sur la rondelle rigide (11).

5. Dispositif d'étanchéité selon revendication 4, caractérisé en ce qu'une lèvre racleuse (14) en matériau élastique, appliquée sur la tige du piston (6), et disposée sur la rondelle rigide (11).

6. Dispositif d'étanchéité selon une des revendications 1 ou 3, caractérisé en ce qu'un joint d'étanchéité (122) en matière plastique résistant à la température et comportant une lèvre d'étanchéité (123) circulaire appliquée avec prétension sur la tige de piston (104) est disposé au voisinage de la garniture d'étanchéité (115, 115a).

7. Dispositif d'étanchéité selon revendication 6, caractérisé par la réalisation du joint d'étanchéité (122) en polytétrafluoréthylène.

8. Dispositif d'étanchéité selon une des revendications 6 ou 7, caractérisé en ce que le joint d'étanchéité (122) est entouré par un joint torique (124) précontraint.

9. Dispositif d'étanchéité selon une des revendications 6 ou 7, caractérisé en ce que le joint d'étanchéité (122) est entouré avec précontrainte par la garniture d'étanchéité (115, 115a).

10. Dispositif d'étanchéité selon revendication 9, caractérisé en ce que le joint d'étanchéité (118) et la garniture d'étanchéité (115, 115a) forment une seule pièce.

11. Dispositif d'étanchéité selon revendication 10, caractérisé en ce qu'un ressort de compression (119) à action axiale est affecté au joint d'étanchéité (118).

Fig. 1

Fig. 3

Fig 2